# EUROPÄISCHE PATENTSCHRIFT

(11) **EP 2 764 592 B1**
(45) Veröffentlichungstag und Bekanntmachung des Hinweises auf die Patenterteilung: **02.03.2016**
(21) Anmeldenummer: 11794680.6
(22) Anmeldetag: 01.12.2011
(51) Int. Cl.: H02H 1/00, H02H 3/087, H03K 17/00

(54) **SELEKTIVITÄTSMODUL MIT SERIELLEM ZUSTANDSSIGNAL**
SELECTIVITY MODULE WITH SERIAL STATUS SIGNAL
MODULE DE SÉLECTIVITÉ AVEC SIGNAL D'ÉTAT EN SÉRIE

(43) Veröffentlichungstag der Anmeldung: 13.08.2014
(73) Patentinhaber: Siemens Aktiengesellschaft, 80333 München (DE)
(72) Erfinder: JANISCH, Heiko, 09577 Braunsdorf (DE)
(86) Internationale Anmeldenummer: PCT/EP2011/071481
(87) Internationale Veröffentlichungsnummer: WO 2013/079110

(56) Entgegenhaltungen:
- US-A- 5 170 310
- US-A1- 2003 033 119

## Beschreibung

Die vorliegende Erfindung betrifft ein Selektivitätsmodul zum Aufteilen eines Laststroms in einem Installationssystem mit einem Gehäuse, mehreren Abzweigen in dem Gehäuse, je einer Schalteinrichtung in jedem Abzweig zum Anschalten und Abschalten eines Abzweigstroms. Darüber hinaus betrifft die vorliegende Erfindung ein Verfahren zum Bereitstellen eines Zustandssignals eines derartigen Selektivitätsmoduls.

Ein Selektivitätsmodul, was auch als Diagnosemodul bezeichnet werden kann, dient zum Aufteilen eines Laststroms in einem Installationssystem. Die Anmelderin stellt beispielsweise ein Selektivitätsmodul mit der Bezeichnung PSE 200U her. Dieses Selektivitätsmodul teilt den Laststrom auf mehrere 24-V-Abzweige auf und überwacht sie zuverlässig auf Überlast und Kurzschluss. Kurzfristige Stromspitzen, z. B. durch hohen Einschaltstrom, lässt die Elektronik zu, Abzweige mit längerer Überlast schaltet sie stromlos. Dies wird selbst auf hochohmigen Leitungen und bei "schleichenden" Kurzschlüssen sichergestellt. Hier kommen Leitungsschutzschalter nicht oder zu spät zum Auslösen, auch wenn das Netzgerät den erforderlichen Auslösestrom liefern könnte.

Das genannte Selektivitätsmodul weist beispielsweise vier Abzweige auf, die auch als Kanäle bezeichnet werden können. In jedem Kanal ist eine Schalteinrichtung vorgesehen, die den jeweiligen Kanal an- oder abschaltet, wodurch der entsprechende Abzweigstrom fließt oder nicht.

Für das Gesamtsystem ist es beispielsweise im Rahmen einer Diagnose notwendig, festzustellen, welche Kanäle des Selektivitätsmoduls ausgelöst, d. h. abgeschaltet, sind. Das genannte Diagnose- und Selektivitätsmodul verfügt nur über einen potentialfreien Relaiskontakt zur Summenfehlermeldung. D. h. die Zustandsmeldungen der einzelnen Schalteinrichtungen werden zusammengefasst und das Selektivitätsmodul liefert nach außen lediglich die Information, dass einer der Kanäle ausgelöst hat. Dabei kann nicht unterschieden werden, ob ein oder mehrere Kanäle ausgelöst haben. Ist eine kanalgenaue Auswertung erforderlich, muss jeder Kanal über je einen Digitaleingang z. B. einer speicherprogrammierbaren Steuerung (SPS) bzw. einer Datenverarbeitungseinrichtung einzeln überwacht werden, d. h. es werden vier Eingangskanäle benötigt.

Aus der US 5,170,310 ist eine Abschalteinrichtung mit zwei Abzweigschaltern und einem Hauptschalter offenbart. Eine Steuereinrichtung steuert abhängig von einer Strom- und Spannungsüberwachung in den Abzweigen die Abzweigschalter und wirkt somit auf fehlerhafte Zustände in den Abzweigen ein.

Die Aufgabe der vorliegenden Erfindung besteht darin, ein Selektivitätsmodul bereitzustellen, das einfach aufgebaut ist und bei dem der Zustand der einzelnen Kanäle differenzierter ausgegeben werden kann. Darüber hinaus soll ein entsprechendes Verfahren zum Bereitstellen eines Zustandssignals eines Selektivitätsmoduls zur Verfügung gestellt werden.

Erfindungsgemäß wird diese Aufgabe nach Anspruch 1 durch ein Selektivitätsmodul mit folgenden Merkmalen gelöst:
- die Schalteinrichtungen dienen zum Ausgeben einer Information über einen korrespondierenden Schaltzustand dienen,
- eine Steuereinrichtung, die mit den Schalteinrichtungen verbunden ist, ist zum Ausgeben eines Zustandssignals in Abhängigkeit von den Informationen der Schalteinrichtungen vorgesehen und
- in dem Zustandssignal sind die Informationen über die einzelnen Schaltzustände aller Schalteinrichtungen seriell, codiert enthalten.

Darüber hinaus wird erfindungsgemäß offenbart ein Verfahren zum Bereitstellen eines Zustandssignals eines Selektivitätsmoduls zum Aufteilen eines Laststroms in einem Installationssystem, wobei das Selektivitätsmodul ein Gehäuse, mehrere Abzweige in dem Gehäuse und je eine Schalteinrichtung in jedem Abzweig zum Anschalten und Abschalten eines Abzweigstroms aufweist, mit folgenden Schritten:
- Ausgeben je einer Information durch jede der Schalteinrichtungen über ihren jeweiligen Schaltzustand,
- Bereitstellen eines Zustandssignals in Abhängigkeit von den Informationen der Schalteinrichtungen, wobei
- in dem Zustandssignal die Informationen über die einzelnen Schaltzustände aller Schalteinrichtungen seriell, codiert enthalten sind.

In vorteilhafter Weise sind also in dem Zustandssignal die Informationen über die einzelnen Schaltzustände aller Schalteinrichtungen seriell, kodiert insbesondere in einem Datenwort enthalten. Dadurch bedarf es bei dem Selektivitätsmodul lediglich eines einzigen digitalen Ausgangs, um die Zustände aller Kanäle bzw. Schalteinrichtungen nach außen zu vermitteln. Ebenso braucht beispielsweise eine SPS, die dieses Zustandssignal aufnimmt, lediglich einen einzigen digitalen Eingang, um die Zustände der einzelnen Schalteinrichtungen des Selektivitätsmoduls differenziert auszuwerten.

Vorzugsweise genügt das Zustandssignal einem Protokoll, und dieses Protokoll ist veränderbar. Damit kann das Zustandssignal an verschiedene Applikationen angepasst werden.

Darüber hinaus ist es günstig, wenn in dem Zustandssignal die Informationen über die einzelnen Schaltzustände jeweils binär dargestellt sind. Damit lässt sich eine einfache binäre Auswertung realisieren.

Dabei ist es von Vorteil, wenn das Zustandssignal mehrere aufeinander folgende Informationsblöcke aufweist, in denen für jede der Schalteinrichtungen jeweils ein Bit die Information über den Schaltzustand der jeweiligen Schalteinrichtung kennzeichnet. Hierdurch kann durch ein einziges Bit sicher festgestellt werden, ob die jeweilige Schalteinrichtung an- oder abgeschaltet ist.

Die Informationsblöcke in dem Zustandssignal können periodisch aufeinander folgen. Damit kann eine nachgeschaltete Auswertevorrichtung beispielsweise eine Unterbrechung zu dem Selektivitätsmodul sofort feststellen, da dann die Informationsblöcke nicht mehr periodisch eintreffen.

In einer Ausführungsform weist jeder Informationsblock ein Startbit, das den Beginn des Informationsblocks signalisiert, und ein Stoppbit, das das Ende des Informationsblocks signalisiert, auf. Zwischen dem Startbit und dem Stoppbit können dann die einzelnen Zustandsbits zuverlässig ausgewertet werden.

Zwischen je zwei aufeinander folgenden der Informationsblöcke kann eine vorgegebene Pausenzeit bestehen. Damit kann die Impulslänge aller Bits, ob Zustandsbits, Startbit oder Stoppbit gleich sein, und trotzdem lässt sich der Beginn und das Ende eines Informationsblocks zuverlässig feststellen.

Alternativ kann jeder Informationsblock ein Startbit aufweisen, wobei die Zustandsbits des Informationsblocks jeweils die gleiche vorgegebene erste zeitliche Dauer besitzen, und das Startbit eine von der ersten zeitlichen Dauer verschiedene zweite zeitliche Dauer aufweist. Auf diese Weise kann auf Pausen zwischen zwei Informationsblöcken verzichtet werden, so dass in dem Zustandssignal einem der Informationsblöcke zeitlich unmittelbar ein zweiter der Informationsblöcke folgt. Hierdurch lässt sich die Informationsdichte erhöhen. Darüber hinaus kann bei dieser Signalgestaltung auch auf ein Stoppbit verzichtet werden.

Die vorliegende Erfindung wird nun anhand der beigefügten Zeichnungen näher erläutert, in denen zeigen:
- FIG 1: ein schematisches Blockschaltbild eines erfindungsgemäßen Selektivitätsmoduls mit Beschaltung;
- FIG 2: ein Signalmuster eines Zustandssignals gemäß einer ersten Ausführungsform und
- FIG 3: ein Signalmuster eines Zustandssignals gemäß einer zweiten Ausführungsform.

Die nachfolgend näher geschilderten Ausführungsbeispiele stellen bevorzugte Ausführungsformen der vorliegenden Erfindung dar.

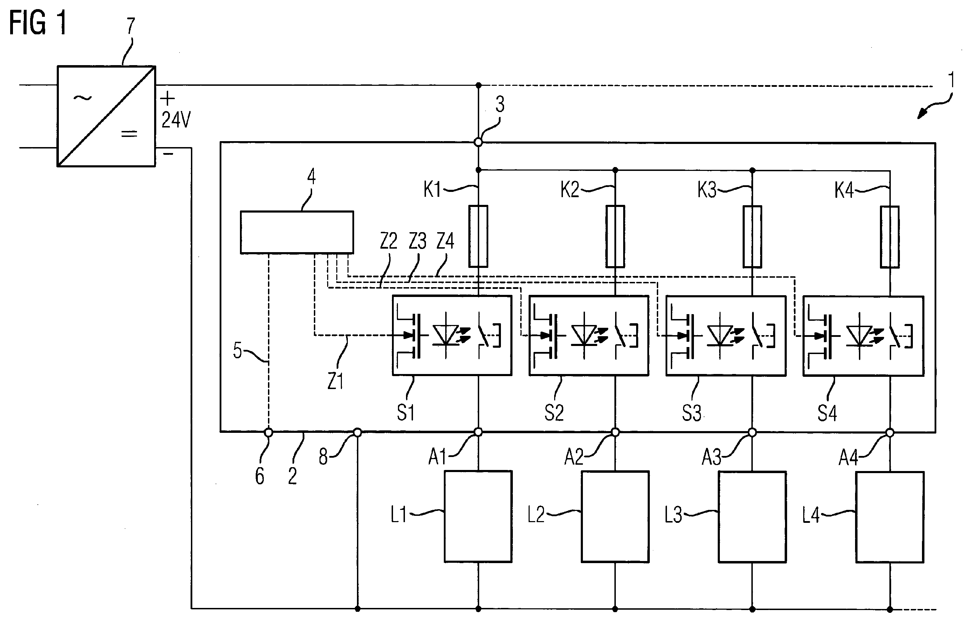

Die FIG 1 gibt ein Selektivitätsmodul 1 mit einem Gehäuse 2 wieder. In dem Gehäuse 2 sind hier vier Schalteinrichtungen S1 S2, S3 und S4 angeordnet. Jede der Schalteinrichtungen ist einem Kanal K1, K2, K3 und K4 zugeordnet. Ein Moduleingang 3 ist mit sämtlichen Kanälen K1 bis K4 verbunden. Jede der Schaltereinrichtungen S1 bis S4 ist also eingangsseitig mit dem Moduleingang 3 verbunden. Ausgangsseitig besitzt jede der Schalteinrichtungen S1 bis S4 einen separaten Ausgang A1, A2, A3 und A4 der zugleich jeweils einen Modulausgang und damit eine elektrische Schnittstelle am Gehäuse 2 des Selektivitätsmoduls 1 darstellt.

Jede der Schalteinrichtungen S1 bis S4 kann einen Einschaltzustand und einen Ausschaltzustand annehmen. Fließt durch eine Schalteinrichtung beispielsweise ein definierter Überlaststrom oder ein definierter Kurzschlussstrom, so schaltet die Schalteinrichtung ab, d.h. der Kanal hat ausgelöst.

Eine Information über den jeweiligen Schaltzustand liefert jede Schalteinrichtung S1 bis S4 über eine Zustandssignalleitung Z1, Z2, Z3 und Z4 an eine Steuerlogik 4, die ebenfalls in das Gehäuse 2 integriert ist. Die Steuerlogik 4 verarbeitet die Zustandsinformationen der einzelnen Schalteinrichtungen S1 bis S4 zu einem seriellen, kodierten Zustandssignal.

Dieses Signal enthält also Informationen über sämtliche Zustände der Schalteinrichtungen S1 bis S4. Dieses Zustandssignal wird über eine Ausgangsleitung 5 an einem Modulausgang 6 bereitgestellt.

In dem in FIG 1 beschalteten Zustand ist das Selektivitätsmodul 1 eingangsseitig, d.h. mit seinem Moduleingang 3 beispielsweise an die Plusschiene eines Gleichrichters 7 geschaltet, der hier eine Gleichspannung von 24 V liefert. Die Minusschiene des Gleichrichters 7 ist an einen weiteren Eingang 8 des Selektivitätsmoduls 1 geschaltet, dessen weitere Verdrahtung im Inneren des Gehäuses 2 der Übersicht halber hier nicht dargestellt ist. An die Ausgänge A1 bis A4 des Selektivitätsmoduls 1 sind jeweils einzeln Lasten L1, L2, L3 und L4 geschaltet. Die Lasten L1 bis L4 sind andererseits gemeinsam mit der Minusschiene des Gleichrichters 7 verbunden. Auf diese Weise können mehrere Selektivitätsmodule parallel an den Gleichrichter 7 bzw. eine entsprechende Stromquelle angeschlossen werden.

Zur Auswertung der Zustände der Kanäle K1 bis K4 bzw. der Schalteinrichtungen S1 bis S4 wird der Modulausgang 6 beispielsweise mit einer SPS oder einer entsprechenden Datenverarbeitungseinrichtung verbunden. Eine derartige SPS bzw. Datenverarbeitungseinrichtung ist in FIG 1 der Übersicht halber nicht dargestellt.

Somit ist es also möglich die Zustände der einzelnen zu überwachenden Kanäle K1 bis K4 durch die Ausgabe eines seriellen Datenworts zu beschreiben. In diesem Datenwort sind die Zustände der Einzelkanäle kodiert und können so in der SPS oder der Datenverarbeitungseinrichtung weiterverarbeitet werden.

Die Zustände der zu überwachenden Kanäle K1 bis K4 bzw. Schalteinrichtungen S1 bis S4 können einzeln, d.h. kanalgenau erfasst und weiterverarbeitet werden. Dafür wird nur ein einziger digitaler Eingang einer dem Selektivitätsmodul nachgeschalteten Steuerung benötigt. Damit ist es möglich, komplexe Anlagenteile sehr günstig und einfach in Automatisierungslösungen zu implementieren.

Diese Art der Zustandskommunikation zeichnet sich dadurch aus, dass sie ein sehr einfaches Protokoll verwenden kann, welches einfach zu erzeugen ist. Durch einfache digitale Eingänge und einem entsprechenden Verarbeitungsmodul im verarbeitenden Programm können diese Signale aufwandsarm weiterverarbeitet werden. Insbesondere sind somit im Hinblick auf das Beispiel von FIG 1 nicht vier separate Digitaleingänge einer SPS für ein Modul erforderlich, wie das bei bislang bekannten Selektivitätsmodulen der Fall ist. Es entstehen dadurch geringere Kosten für die Verdrahtung und die erforderlichen Digitaleingänge der SPS. Das Protokoll ist skalierbar, d.h. veränderbar, und kann somit an viele Applikationen im Umfeld von Stromversorgungseinrichtungen angepasst werden.

In einem konkreten Ausführungsbeispiel kann der Ausgang 6 des Selektivitätsmoduls 1 mit einem Optokoppler oder Schalttransistor realisiert werden. Diese zeichnen sich gegenüber mechanischen Relais durch ihre Verschleißfestigkeit aus. Grundsätzlich können an dem Ausgang 6 aber auch im Bedarfsfall Melderelais vorgesehen sein.

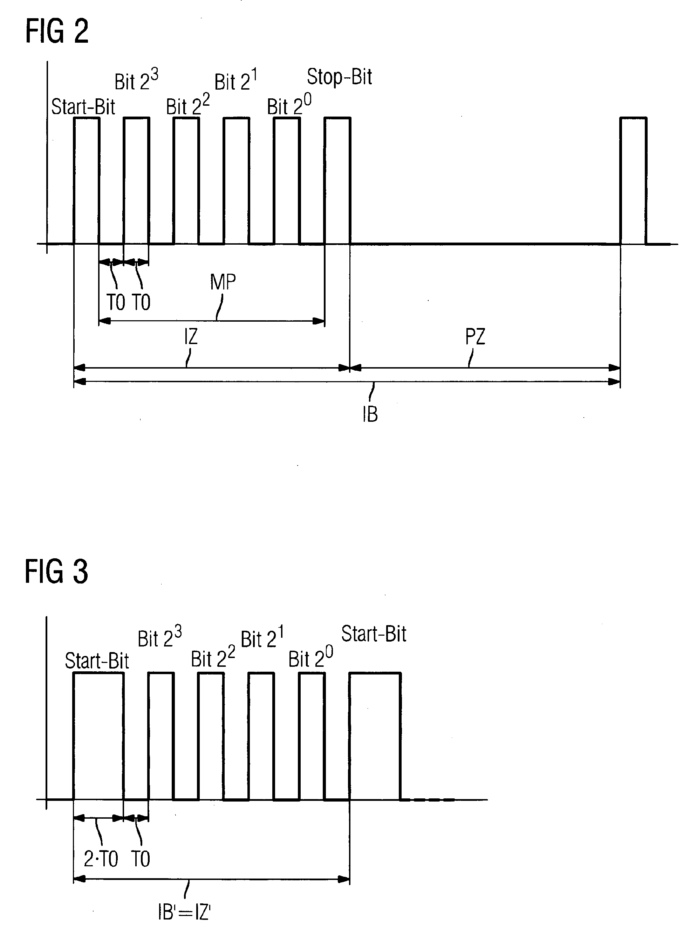

In FIG 2 ist die konkrete Form eines Zustandssignals, nämlich eine serielle Impulsfolge dargestellt. Speziell zeigt FIG 2 einen Ausschnitt aus einem periodischen Zustandssignal. Eine Periode entspricht der Dauer eines Informationsblocks IB. Ein Informationsblock IB enthält die Information über sämtliche Zustände der Kanäle bzw. Schalteinrichtungen des Selektivitätsmoduls. Er ist hier unterteilt in eine Informationszeit IZ und eine Pausenzeit PZ. Beide können in einem konkreten Ausführungsbeispiel die Länge von 2200 ms besitzen. Die Informationszeit IZ beginnt mit einem Start-Bit und endet mit einem Stopp-Bit. Dazwischen befinden sich hier vier Bits mit den Wertigkeiten 2³, 2², 2¹ und 2⁰. Jedes Bit besitzt hier eine zeitliche Dauer von T0. Zwischen zwei benachbarten Bits befindet sich jeweils eine Pause der Dauer von T0. Jedes Bit besitzt einen Signalwert, der dem Bitwert entspricht. Beispielsweise entspricht der Signalwert beim Bitwert eins einem vorgegebenen Pegel und ist beim Bitwert null ebenfalls null. Sind sämtliche Zustandsbits in dem Beispiel von FIG 2 null, so ergibt sich zwischen dem Startbit und dem Stoppbit eine maximale Pause MP. Diese maximale Pause MP in der Informationszeit IZ kann beispielsweise 1800 ms betragen, wenn die Dauer T0 200 ms beträgt. Damit ist die Pausenzeit PZ (2200 ms) definiert länger als die maximale Pause MP innerhalb der Informationszeit IZ, wenn alle Informations-Bits null sind. Hierdurch ist stets die Unterscheidbarkeit von Pausenzeit PZ und Informationszeit IZ gegeben.

Die in dem Beispiel von FIG 2 gewählten Zeiten können auch von einer "langsamen" SPS mit einem einzigen digitalen Eingang verarbeitet werden. Der Grund hierfür ist, dass die Pegelzeit 200 ms lang und somit deutlich länger als die typische Zykluszeit einer SPS ist.

Das Zustandssignal von FIG 2 entspricht einem vorbestimmten Protokoll. Dieses Protokoll kann aber für eine andere Applikation variiert werden. Ein Beispiel hierzu ist in FIG 3 wiedergegeben. Gemäß dem dortigen Protokoll werden wiederum periodisch übertragene Informationsblöcke IB' verwendet. Jeder Informationsblock IB' beginnt mit einem Startbit. Die Breite eines Startbits ist in diesem Beispiel doppelt so groß wie diejenige des Startbits von FIG 2. Das Startbit besitzt also eine Breite von 2 · T0 (z.B. 400 ms). D.h. ein Startbit weist von Beginn an einen von null verschiedenen, vorgegebenen Signalwert auf, der bis zum Bitende konstant ist.

Zwischen zwei Startbits liegen hier wiederum vier Zustandsbits, die die Zustände der vier Kanäle des Selektivitätsmoduls von FIG 1 repräsentieren. Jedes Zustandsbit besitzt die gleiche Struktur wie in dem Beispiel von FIG 2.

Die Länge eines Informationsblocks IB' entspricht hier also der Länge einer Informationszeit IZ'. Ein Vorteil gegenüber der Variante von FIG 2 besteht also in der Halbierung der Zyklus-(Refresh-)Zeit. Dies wird hier dadurch ermöglicht, dass ein Startbit und ein Zustandsbit unterschiedlich lange (Ein-)Pegelzeiten besitzen. In dem Beispiel ist der von null verschiedene Pegel im Startbit doppelt so lang wie im Zustands- bzw. Informations-Bit.

Das Protokoll für das Zustandssignal kann weiter variiert werden. Beispielsweise kann die Struktur eines einzelnen Bits verändert werden. Darüber hinaus können die Pegel auch invertiert werden. Außerdem kann ein Selektivitätsmodul auch eine andere Anzahl an Kanälen, z.B. zwei, drei, fünf etc. besitzen, wodurch sich die Informationsblöcke gegenüber dem dargestellten Beispiel mit vier Kanälen entsprechend verkürzen oder verlängern.

Das binäre Zustandssignal kann beispielsweise für eine Signalkodierung gemäß nachfolgender Tabelle verwendet werden.

**Tabelle: Signalkodierung**

| | Bit 2³ | Bit 2² | Bit 2¹ | Bit 2⁰ | Wert |
|---|---|---|---|---|---|
| Kanal | A | B | C | D | |
| | 0 | 0 | 0 | 0 | 0 |
| | 0 | 0 | 0 | 1 | 1 |
| | 0 | 0 | 1 | 0 | 2 |
| | 0 | 0 | 1 | 1 | 3 |
| | 0 | 1 | 0 | 0 | 4 |
| | 0 | 1 | 0 | 1 | 5 |
| | 0 | 1 | 1 | 0 | 6 |
| | 0 | 1 | 1 | 1 | 7 |
| | 1 | 0 | 0 | 0 | 8 |
| | 1 | 0 | 0 | 1 | 9 |
| | 1 | 0 | 1 | 0 | 10 |
| | 1 | 0 | 1 | 1 | 11 |
| | 1 | 1 | 0 | 0 | 12 |
| | 1 | 1 | 0 | 1 | 13 |
| | 1 | 1 | 1 | 0 | 14 |
| | 1 | 1 | 1 | 1 | 15 |

Entsprechend dieser Signalkodierung kann aus den jeweils gesetzten Zustands- bzw. Informationsbits der Zustand des Selektivitätsmoduls mit den vier Kanälen in einem Zahlenwert (0 bis 15) eindeutig dargestellt werden. So entspricht der Zahlenwert null dem Fall, dass keiner der vier Kanäle ausgelöst hat. Der Zahlenwert vier entspricht dem Fall, dass nur der Kanal B ausgelöst hat. Darüber hinaus entspricht der Zahlenwert 11 dem Fall, dass die Kanäle A, C und D ausgelöst haben, und der Zahlenwert 15 dem Fall, dass alle Kanäle ausgelöst haben.

Das Datenwort, das diesen dezimalen Zahlenwert repräsentiert, kann in jeder SPS ausgewertet und weiterverarbeitet werden. Die zyklische Aktualisierung des Zahlenwerts erfolgt in dem Beispiel von FIG 2 alle 4,4 s und in dem Beispiel von FIG 3 alle 2,2 s.

In vorteilhafter Weise ist durch das serielle, kodierte Zustandssignal eine unmittelbare Zuordnung der ausgegebenen Zustandsinformation zu den Kanälen möglich, so dass sich etwaige Stillstandszeiten einer Anlage reduzieren lassen. Darüber hinaus lässt sich ein Drahtbruch oder eine Unterbrechung der Verbindung zwischen dem Selektivitätsmodul und einer angeschlossenen SPS sicherer erkennen, wenn die Signalübertragung zyklisch erfolgt. Die SPS kann also auf das Ausbleiben des Zustandssignals entsprechend reagieren.

Als weiterer Vorteil gegenüber Selektivitätsmodulen gemäß dem Stand der Technik ist nochmals zu betonen, dass nur ein einziger Digitaleingang einer SPS notwendig ist, um die Zustände eines Selektivitätsmoduls auszuwerten. Dementsprechend reduziert ist auch der notwendige Verdrahtungsaufwand, weswegen entsprechende Kosteneinsparungen zu erwarten sind.

## Patentansprüche

1. Selektivitätsmodul (1) zum Aufteilen eines Laststroms in einem Installationssystem mit
- einem Gehäuse (2),
- mehreren Abzweigen (K1 bis K4) in dem Gehäuse (2),
- je einer Schalteinrichtung (S1 bis S4) in jedem Abzweig zum Anschalten und Abschalten eines Abzweigstroms,
**dadurch gekennzeichnet, dass**
- die Schalteinrichtungen (S1 bis S4) zum Ausgeben einer Information über einen korrespondierenden Schaltzustand dienen,
- eine Steuereinrichtung (4), die mit den Schalteinrichtungen verbunden ist, zum Ausgeben eines Zustandssignals in Abhängigkeit von den Informationen der Schalteinrichtungen vorgesehen ist und
- in dem Zustandssignal die Informationen über die einzelnen Schaltzustände aller Schalteinrichtungen seriell, codiert enthalten sind.

2. Selektivitätsmodul nach Anspruch 1, wobei das Zustandssignal einem Protokoll genügt und das Protokoll veränderbar ist.

3. Selektivitätsmodul nach Anspruch 1 oder 2, wobei in dem Zustandssignal die Informationen über die einzelnen Schaltzustände jeweils binär dargestellt sind.

4. Selektivitätsmodul nach Anspruch 3, wobei das Zustandssignal mehrere aufeinander folgende Informationsblöcke (IB) aufweist, in denen für jede der Schalteinrichtungen (S1 bis S4) jeweils ein Zustandsbit die Information über den Schaltzustand der jeweiligen Schalteinrichtung kennzeichnet.

5. Selektivitätsmodul nach Anspruch 4, wobei die Informationsblöcke (IB) in dem Zustandssignal periodisch aufeinander folgen.

6. Selektivitätsmodul nach Anspruch 4 oder 5, wobei jeder Informationsblock (IB) ein Startbit, das den Beginn des Informationsblocks signalisiert, und ein Stoppbit, das das Ende des Informationsblocks signalisiert, aufweist.

7. Selektivitätsmodul nach einem der Ansprüche 4 bis 6, wobei zwischen je zwei aufeinander folgenden der Informationsblöcke (IB) eine vorgegebene Pausenzeit (PZ) besteht.

8. Selektivitätsmodul nach Anspruch 4 oder 5, wobei jeder Informationsblock (IB) ein Startbit aufweist, die Zustandsbits des Informationsblocks jeweils die gleiche vorgegebene erste zeitliche Dauer (T0) besitzen, und das Startbit eine von der ersten zeitlichen Dauer verschiedene zweite zeitliche Dauer (2 · T0) aufweist.

9. Selektivitätsmodul nach Anspruch 8, wobei in dem Zustandssignal einem der Informationsblöcke (IB) zeitlich unmittelbar ein zweiter der Informationsblöcke folgt.

10. Verfahren zum Bereitstellen eines Zustandssignals eines Selektivitätsmoduls (1) zum Aufteilen eines Laststroms in einem Installationssystem, wobei das Selektivitätsmodul ein Gehäuse (2), mehrere Abzweige (K1 bis K4) in dem Gehäuse und je eine Schalteinrichtung (S1 bis S4) in jedem Abzweig zum Anschalten und Abschalten eines Abzweigstroms aufweist, mit folgenden Schritten:
- Ausgeben je einer Information durch jede der Schalteinrichtungen über ihren jeweiligen Schaltzustand,
- Bereitstellen eines Zustandssignals in Abhängigkeit von den Informationen der Schalteinrichtungen,
- in dem Zustandssignal die Informationen über die einzelnen Schaltzustände aller Schalteinrichtungen seriell, codiert enthalten sind.

## Claims

1. Selectivity module (1) for dividing a load current in an installation system having
- a housing (2),
- a plurality of branches (K1 to K4) in the housing (2),
- one switching device (S1 to S4) in each branch for switching a branch current on and off,
**characterised in that**
- the switching devices (S1 to S4) serve to output information about a corresponding switching state,
- a control unit (4) which is connected to the switching devices is provided for outputting a status signal as a function of the information from the switching devices, and
- the information relating to the individual switching states of all of the switching devices is contained in the status signal in serial encoded form.

2. Selectivity module according to claim 1, wherein the status signal conforms to a protocol and the protocol is variable.

3. Selectivity module according to claim 1 or 2, wherein the information relating to the individual switching states is represented in the status signal in binary form in each case.

4. Selectivity module according to claim 3, wherein the status signal has a plurality of sequential information blocks (IB) in which one status bit for each of the switching devices (S1 to S4) in each case characterises the information relating to the switching state of the respective switching device.

5. Selectivity module according to claim 4, wherein the information blocks (IB) in the status signal succeed one another periodically.

6. Selectivity module according to claim 4 or 5, wherein each information block (IB) has a start bit, which signals the start of the information block, and a stop bit, which signals the end of the information block.

7. Selectivity module according to one of claims 4 to 6, wherein a predefined interval time (PZ) exists between each two succeeding information blocks (IB).

8. Selectivity module according to claim 4 or 5, wherein each information block (IB) has a start bit, the status bits of the information block each possess the same predefined first temporal duration (TO), and the start bit has a second temporal duration (2 · T0) that is different from the first temporal duration.

9. Selectivity module according to claim 8, wherein one of the information blocks (IB) in the status signal is followed immediately in time by a second of the information blocks.

10. Method for providing a status signal of a selectivity module (1) for dividing a load current in an installation system, wherein the selectivity module has a housing (2), a plurality of branches (K1 to K4) in the housing, and one switching device (S1 to S4) in each branch for the purpose of switching a branch current on and off, comprising the following steps:
- outputting one piece of information by each of the switching devices to indicate its respective switching state,
- providing a status signal as a function of the information from the switching devices,
- the information about the individual switching states of all of the switching devices is contained in serial encoded form in the status signal.

## Revendications

1. Module de sélectivité (1) destiné à répartir un courant de charge dans un système d'installation, avec
- un boîtier (2),
- plusieurs branchements (K1 à K4) dans le boîtier (2),
- respectivement un dispositif de commutation (S1 à S4) dans chaque branchement pour connecter et déconnecter un courant de branchement,
**caractérisé en ce que**
- les dispositifs de commutation (S1 à S4) servent à émettre une information sur un état de commutation correspondant,
- un dispositif de commande (4), qui est relié aux dispositifs de commutation, étant prévu pour émettre un signal d'état en fonction des informations des dispositifs de commutation, et
- les informations sur les états de commutation individuels de tous les dispositifs de commutation sont contenues en série sous forme codée dans le signal d'état.

2. Module de sélectivité selon la revendication 1, dans lequel le signal d'état satisfait à un protocole et le protocole peut être changé.

3. Module de sélectivité selon la revendication 1 ou 2, dans lequel les informations sur les états de commutation individuels sont représentées respectivement sous forme binaire dans le signal d'état.

4. Module de sélectivité selon la revendication 3, dans lequel le signal d'état présente plusieurs blocs d'informations successifs (IB), dans lesquels un bit d'état caractérise respectivement pour chacun des dispositifs de commutation (S1 à S4) les informations sur l'état de commutation du dispositif de commutation respectif.

5. Module de sélectivité selon la revendication 4, dans lequel les blocs d'informations (IB) se suivent périodiquement dans le signal d'état.

6. Module de sélectivité selon la revendication 4 ou 5, dans lequel chaque bloc d'informations (IB) présente un bit de démarrage, qui signale le début du bloc d'informations, et un bit d'arrêt, qui signale la fin du bloc d'informations.

7. Module de sélectivité selon l'une quelconque des revendications 4 à 6, dans lequel il existe un temps de pause prédéterminé (PZ) chaque fois entre deux des blocs d'informations (IB) qui se suivent.

8. Module de sélectivité selon la revendication 4 ou 5, dans lequel chaque bloc d'informations (IB) présente un bit de démarrage, les caractères d'état du bloc d'informations possèdent respectivement la même première durée temporelle prédéterminée (T0), et le bit de démarrage présente une deuxième durée temporelle (2 · T0) différente de la première durée temporelle.

9. Module de sélectivité selon la revendication 8, dans lequel un deuxième des blocs d'informations suit dans le temps immédiatement un des blocs d'informations (IB) dans le signal d'état.

10. Procédé pour produire un signal d'état d'un module de sélectivité (1) destiné à répartir un courant de charge dans un système d'installation, dans lequel le module de sélectivité présente un boîtier (2), plusieurs branchements (K1 à K4) dans le boîtier et respectivement un dispositif de commutation (S1 à S4) dans chaque branchement pour connecter et déconnecter un courant de branchement, avec les étapes suivantes:
- émettre respectivement une information par chacun des dispositifs de commutation sur leur état de commutation respectif,
- fournir un signal d'état en fonction des informations des dispositifs de commutation,
- les informations sur les états de commutation individuels de tous les dispositifs de commutation sont contenues en série sous forme codée dans le signal d'état.
